# EUROPÄISCHE PATENTSCHRIFT

(11) **EP 2 039 893 B1**
(45) Veröffentlichungstag und Bekanntmachung des Hinweises auf die Patenterteilung: **26.04.2017**
(21) Anmeldenummer: 08013058.6
(22) Anmeldetag: 19.07.2008
(51) Int. Cl.: F01M 1/10, F01M 11/03, F16N 39/06, B01D 61/14, C10M 175/06

(54) **Einrichtung und Verfahren zum Reinigen von Schmiermitteln sowie Schmiermittelkreislauf**
Device and method for cleaning lubricants and lubricant circuit
Dispositif et procédé de nettoyage de lubrifiants et circuit de lubrifiants

(30) Priorität: 18.09.2007 DE 102007044524
(43) Veröffentlichungstag der Anmeldung: 25.03.2009
(73) Patentinhaber: MAN Diesel & Turbo SE, 86153 Augsburg (DE)
(72) Erfinder: König, Nikolaus, 82278 Althegnenberg (DE); Förster, Michael, 86456 Gablingen (DE)

(56) Entgegenhaltungen:
- EP-A2- 0 242 429
- DE-A1- 2 417 452
- DE-A1- 19 724 172
- JP-A- 63 068 695

## Beschreibung

Die Erfindung betrifft eine Einrichtung zum Reinigen von Schmiermittel, insbesondere Schmieröl, welches in einem Schmiermittelkreislauf, insbesondere eines Motors, eines Verdichters, eines Turboladers oder dergleichen zirkuliert, mit einem mit dem Schmiermittelkreislauf zu verbindenden Zulauf, durch welchen eine Teilmenge des im Schmiermittelkreislauf zirkulierenden Schmiermittels zum zumindest teilweise Entfernen von im Schmiermittel enthaltenden Verunreinigungen der Reinigungseinrichtung zuzuführen ist, und einem mit dem Schmiermittelkreislauf zu verbindenden Rücklauf zum Zurückführen des gereinigten Schmiermittels in den Schmiermittelkreislauf. Ferner betrifft die Erfindung einen Schmiermittelkreislauf nach dem Oberbegriff des Anspruchs 14 und ein Verfahren zum Reinigen von Schmiermittel nach dem Oberbegriff des Anspruchs 15. Motoren, insbesondere große Motoren, wie Schiffsmotoren, aber auch Verdichter Turbolader und andere Anlagen sind üblicherweise mit einem umfangreichen Schmiermittelsystem ausgestattet, um einen verschleißarmen Betrieb sicherzustellen. Das Schmiermittel dient dabei zum ausreichenden Schmieren bewegter Bauteile sowie als Kühlmittel und entfernt Verbrennungsrückstände sowie Abrieb von den sich relativ zueinander bewegenden Flächen der Lager und Gleitflächen. Während des Betriebes wird das Schmiermittel mit Hilfe einer oder mehrerer Schmiermittelpumpen in einem Schmiermittelkreislauf intermittierend oder kontinuierlich umgewälzt. Da im Verlauf des Betriebes der Anteil an Verbrennungsrückständen, Abrieb und dergleichen im Schmiermittel zunimmt, ist es erforderlich, derartige Verunreinigungen mit Hilfe entsprechender Einrichtungen aus dem Schmiermittel kontinuierlich oder diskontinuierlich zu filtern.

Derzeit wird Schmieröl beispielsweise bei Großdieselmotoren durch Separatoren unter Verwendung von Wasser gereinigt, wobei entsprechend Öl-/Wasserschlämme erzeugt werden, die aufwendig aufbereitet oder entsorgt werden müssen.

Aus der DE 197 24 172 A1 ist bereits ein Verfahren zum Reinigen von Öl von Verunreinigungen bekannt geworden, wobei die Reinigung des Öls durch Querstromfiltration erfolgt.

Aufgabe der Erfindung ist es, eine Einrichtung bzw. ein Verfahren zum Reinigen von Schmiermittel, welches in einem Schmiermittelkreislauf zirkuliert, bzw. einen Schmiermittelkreislauf mit einer derartigen Einrichtung anzugeben, mit der bzw. bei dem eine verbesserte Filterleistung gegenüber bekannten Reinigungseinrichtungen erzielt werden kann.

Erfindungsgemäß wird diese Aufgabe durch eine Einrichtung mit den Merkmalen nach Anspruch 1, ein Schmiermittelsystem nach Anspruch 14 bzw. ein Verfahren nach Anspruch 15 gelöst, insbesondere durch einen geschlossenen Reinigungskreislauf, in welchen der Zulauf mündet, eine Fördereinrichtung zum Umwälzen eines im Reinigungskreislauf enthaltenen Umlauföls bzw. -mittels, welches sich mit dem durch den Zulauf dem Reinigungskreislauf zuzuführenden, zu reinigenden Schmiermittel vermengt und bei dem es sich bevorzugt um das gleiche Schmiermittel handelt, und mindestens einen der Fördereinrichtung in Förderrichtung gesehen nachgeordneten Querströmungsfilter, der mit mindestens einer Filtermembran versehen ist, an welcher das Gemisch aus Umlauföl und Schmiermittel zum Filtern vorbeiströmt, wobei ein Teil des Gemisches durch die Filtermembran in eine mit dem Rücklauf verbundene Filtratkammer strömt.

Es wird eine Teilmenge des im Schmiermittelkreislauf zirkulierenden Schmiermittels durch den Zulauf zum Reinigen abgeleitet und der Einrichtung zum Reinigen im Nebenstrom zugeführt. Die erfindungsgemäße Einrichtung zum Reinigen ist mit einem geschlossenen Reinigungskreislauf ausgestattet, in welchen der Zulauf mündet. Der Reinigungskreislauf ist mit zusätzlichem Schmiermittel befüllt, das als Umlauföl mit Hilfe einer Fördereinrichtung umgewälzt wird. Das zu reinigende Schmiermittel wird mit dem Umlauföl vermischt und einer Filtereinrichtung zugeführt. Die Filtereinrichtung ist als Querströmungsfilter ausgebildet, durch den das Gemisch aus zu reinigendem Schmiermittel und Umlauföl mit entsprechendem Förderdruck gefördert wird. Im Querströmungsfilter ist eine Filtermembran angeordnet, durch die ein Teil des Gemisches, verursacht durch den Förderdruck, zum Reinigen in eine Filtratkammer des Querströmungsfilters einströmt. Durch die Strömungsgeschwindigkeit der im Reinigungskreislauf umlaufenden Ölmenge entsteht an der Oberfläche der Filtermembran eine Reinigungswirkung, welche die Bildung eines Filterkuchens an der der umlaufenden Ölmenge zugewandten Seite der Filtermembran verhindert, zumindest aber einschränkt, und vorteilhaft gleichzeitig den spezifischen Filtratfluss durch die Filtermembran stabilisiert. Das so gereinigte Schmiermittel, das in die Filtratkammer einströmt, wird anschließend über den Rücklauf wieder dem Schmiermittelkreislauf zugeführt.

Mit Hilfe dieses Reinigungsprinzips, bei dem ein Querströmungsfilter zum Einsatz kommt, ist die zusätzliche Verwendung von Wasser als Ölreinigungsmittel nicht mehr erforderlich, wodurch die Entstehung der besonders aufwendig aufzubereitenden Öl-/Wasserschlämme vermieden wird, was insbesondere aus Gründen des Umweltschutzes von Vorteil ist. Darüber hinaus ergibt sich aufgrund des Querströmungsfilterns eine verbesserte Filterleistung, so dass auch der Verlust an Schmiermittel, das sonst mit den Verunreinigungen aus dem Schmiermittelkreislauf entfernt werden muss, geringer ist. Vorteilhafterweise kann die Erfindung einen kontinuierlichen Reinigungsbetrieb und, insbesondere im Vergleich zur bekannten Separatorentechnik, eine Abscheidung von Partikel auch ohne Dichteunterschied ermöglichen.

Weitere Vorteile der Erfindung ergeben sich aus der nachfolgenden Beschreibung, den Figuren sowie den Unteransprüchen.

So ist es von besonderem Vorteil, wenn der Querströmungsfilter in der Filtratkammer als Filtermembran ein oder mehrere Filterrohre aufweist, durch die das Gemisch zum Filtrieren hindurchströmt und auf deren Innenseite eine feinporige Oberflächenfiltrationsschicht vorgesehen ist. Die Verwendung von Filterrohren hat den Vorteil, dass bei geringstem Strömungsquerschnitt die größtmögliche Filterfläche bereitgestellt wird. Darüber hinaus ergibt sich durch den geringen Strömungsquerschnitt eine hohe Strömungsgeschwindigkeit, die die Bildung des Filterkuchens zusätzlich verhindert. Alternativ ist es jedoch auch möglich, plattenförmige Filtermembrane vorzusehen, welche parallel nebeneinander angeordnet abwechselnd eine Filtratkammer und eine mit dem Reinigungskreislauf verbundene Konzentratkammer bilden. Der Querströmfilter kann auch mehrzellige Filterelemente, insbesondere Keramikmodule mit runden und/oder rechteckigen Strömungskanälen umfassen, die bei gleicher nominaler Filterfläche kostengünstiger sind.

Bei einer besonders bevorzugten Ausführungsform weist der Reinigungskreislauf einen Einlass für frisches Umlauföl, welcher vorzugsweise über einen Ausgleichsbehälter mit dem Reinigungskreislauf in Verbindung steht, und einen, bevorzugt mit einem Ventil versehenen, Ablauf zum Abführen verschmutzten Umlauföls aus dem Reinigungskreislauf auf. Auf diese Weise kann gezielt der Anteil an Verschmutzungen im Umlauföl eingestellt und der Volumenverlust an verschmutztem, abgeführten Umlauföl ergänzt werden. Bei dieser Ausführungsform kann nach dem Erreichen einer vorgegebenen Aufkonzentrationsrate an Verschmutzungen im Umlauföl aus dem stark verunreinigten Umlauföl eine kleine Menge als Ölschlamm ausgetragen werden, welche durch unverschmutztes Umlauföl ersetzt wird. Die Menge, die als Ölschlamm abgegeben und durch unverschmutztes Umlauföl ersetzt wird, ist dabei so eingestellt, dass die Differenzschmutzmenge der Volumenströme an zu reinigendem Schmiermittel minus gereinigtem Schmiermittel durch den Schmutzgehalt der Menge des als Ölschlamm abgeführten Umlauföls in ein Gleichgewicht geführt wird. Der abgegebene Ölschlamm kann bevorzugt, beispielsweise mittels einer Zentrifuge, in Öl und Schmutz getrennt werden, so dass rückgewonnenes Öl wieder dem Reinigungskreislauf zugeführt und somit der Produktverlust und die zu entsorgende Restmenge noch weiter minimiert werden kann.

In Abhängigkeit vom Betriebsdruck des Schmiermittelkreislaufes kann der im Schmiermittelkreislauf wirkende Betriebsdruck ausreichen, die vorgegebene Teilmenge an zu reinigendem Schmiermittel mit ausreichendem Druck in den Reinigungskreislauf einzuleiten. Um insbesondere auch vom Betriebsdruck des Schmiermittelkreislaufes unabhängig zu sein, wird jedoch bei einer bevorzugten Weiterbildung der erfindungsgemäßen Einrichtung vorgeschlagen, in dem Zulauf gleichfalls eine Fördereinrichtung, vorzugsweise eine Pumpe, vorzusehen, welche das abgezweigte, zu reinigende Schmiermittel mit einem vorbestimmten Förderdruck in den Reinigungskreislauf fördert. Während die im Reinigungskreislauf angeordnete Fördereinrichtung das Umlauföl umwälzt und den notwendigen Druck erzeugt, um Schmiermittel-Umlauföl-Gemisch durch den Querströmungsfilter zu drücken, kann mit Hilfe dieser zweiten, in dem Zulauf vorgesehenen Fördereinrichtung ein zusätzlicher Überdruck im Reinigungskreislauf erzeugt werden, durch den die Filterleistung des Querströmungsfilters weiter erhöht und der durch Variieren der Leistung dieser zweiten Fördereinrichtung gezielt verändert werden kann.

Um eine möglichst gute Filterleistung bei der erfindungsgemäßen Einrichtung zu erzielen, wird ferner vorgeschlagen, dass zu reinigende Öl auf eine Prozesstemperatur zu erwärmen, die unter einer Ölschädigungstemperatur liegt bzw. von dieser begrenzt wird. Bevorzugt wird das Öl dabei maximal, d.h. bis kurz unterhalb der Ölschädigungstemperatur erwärmt. Hierzu kann das Öl bevorzugt auf eine Prozesstemperatur von etwa 110 bis 130° C, vorzugsweise auf eine Prozesstemperatur von etwa 120° Cerwärmt werden, bei synthetischen Ölen auch auf etwa 180° C. Zu diesem Zweck wird vorgeschlagen, dass in dem Zulauf mindestens ein Wärmetauscher zum Erwärmen des zu reinigenden Schmiermittels angeordnet ist. Besonders bevorzugt sind zwei Wärmetauscher vorgesehen, wobei einer der Wärmetauscher, ein Gegenstrom-, Gleichstrom- oder Kreuzstromwärmetauscher ist, welcher in den Rücklauf des gereinigten Schmiermittels derart eingebunden ist, dass das in den Schmiermittelkreislauf zurückzuführende gereinigte Schmiermittel das in den Reinigungskreislauf zu leitende, zu reinigende Schmiermittel erwärmt. Auf diese Weise werden gleichzeitig zwei Ziele erreicht, nämlich das noch zu reinigende Schmiermittel zu erwärmen, während gleichzeitig das gereinigte Schmiermittel auf eine für den Betrieb des Schmiermittelkreislaufes optimale Temperatur abgekühlt wird. Bei dieser Lösung ist es auch von Vorteil, wenn der zweite Wärmetauscher ein extern beheizter Wärmetauscher ist, dessen Leistung so verändert werden kann, dass die Temperatur des zu reinigenden Schmiermittels auf die gewünschte Prozesstemperatur hin geregelt werden kann.

Die erfindungsgemäße Einrichtung kann in regelmäßigen Abständen zu Wartungszwecken entleert, mit geeigneten Reinigungsflüssigkeiten gereinigt und erneut befüllt werden. Um jedoch auch während des laufenden Betriebes der erfindungsgemäßen Einrichtung ein Reinigen der Filtermembrane zu ermöglichen, wird vorgeschlagen, die Einrichtung zusätzlich mit einer Spüleinrichtung zum Spülen des Querströmungsfilters mit einem Spülfluid auszustatten. Die Spüleinrichtung steht, vorzugsweise über ein Drei-Wege-Ventil und den Rücklauf, mit dem Querströmungsfilter in Verbindung. Mit Hilfe der Spüleinrichtung kann, vorzugsweise während die Fördereinrichtung des Reinigungskreislaufes das Umlauföl umwälzt, ein entgegen der normalen Betriebsrichtung wirkender Strömungsdruck erzeugt werden, mit dem das Spülfluid durch die Filtratkammer in den Reinigungskreislauf zurückgefördert wird. Als Spülfluid eignet sich beispielsweise unverschmutztes Schmiermittel, das mit entsprechendem Druck durch den Querströmungsfilter gefördert wird.

Zur Erzeugung des Drucks kann eine entsprechende Pumpe vorgesehen sein. Alternativ ist es jedoch auch möglich, das Spülfluid mit Hilfe eines Hilfsmediums, vorzugsweise Druckluft, entgegen der Filtrationsrichtung durch die Filtermembran zu fördern. Die Verwendung von Druckluft ist insbesondere vorteilhaft, wenn im Reinigungskreislauf ein Druckausgleichsbehälter vorgesehen ist, so dass nach dem Spülen des Querströmungsfilters mit Spülfluid die Druckluft weiter in den Reinigungskreislauf gefördert wird, durch die Filterstruktur des Querströmungsfilters strömt und diesen dabei reinigt. Die im Reinigungskreislauf enthaltene Druckluft sammelt sich dann in dem Ausgleichsbehälter und kann aus diesem vorzugsweise drucklos abgeleitet werden. Der Spülvorgang kann entweder in kontinuierlicher oder aber auch in pulsierender Weise betrieben werden, wobei letztere den Vorteil bietet, dass durch die sich im Spülfluid ausbreitenden Druckimpulse die Reinigungswirkung weiter verbessert wird. Zusätzlich oder alternativ ist es denkbar, am Querströmungsfilter eine oder mehrere Ultraschallsonden vorzusehen, die Ultraschallwellen erzeugen, welche sich im Spülfluid oder in dem sich im Querströmungsfilter befindlichen Öl fortpflanzen und an der Filtermembran anhaftende Verunreinigungen lösen. Alternativ ist es auch möglich, geeignete Spülflüssigkeiten zu verwenden, welche die Reinigungswirkung chemophysikalisch unterstützen und sich beispielsweise aufgrund von Phasentrennung in dem Ausgleichsbehälter des Reinigungskreislaufes sammeln und aus diesem abgeführt werden können.

Um während des Filterns des Schmiermittels die Bildung von Ablagerungen an der Filtermembran wirksam zu verhindern, werden bei einer besonders bevorzugten Ausführungsform der erfindungsgemäßen Einrichtung dem Umlauföl im Reinigungskreislauf Reinigungskörper, beispielsweise kleine Kugeln aus porösem Material, zugegeben, die an der Oberfläche der Filtermembran vom Volumenstrom des Umlauföls entlang bewegt werden und dabei den Filterkuchen, der sich an der Oberfläche abgesetzt hat, entfernen. Als Fördereinrichtung für den Reinigungskreislaufes wird dann bevorzugt eine Strahlpumpe verwendet, um eine Fehlfunktion der Fördereinrichtung, verursacht durch sich eventuell in der Fördereinrichtung verklemmende Reinigungskörper, zu verhindern. Gleichzeitig bewirkt die Strahlpumpe durch die in ihr verursachte Beschleunigung, dass die Oberflächen der Reinigungskörper bei jedem Durchlauf durch die Strahlpumpe ihrerseits gereinigt werden und die an ihnen anhaftenden Partikel an das Umlauföl abgeben. Alternativ sind jedoch auch andere Fördereinrichtungen, insbesondere Kreisel- und/oder Schlauchpumpen denkbar.

Der Treibanschluss der Strahlpumpe kann gleichfalls vom Umlauföl des Reinigungskreislaufes versorgt werden. Zu diesem Zweck ist der Treibanschluss der Strahlpumpe mit einer Zuleitung verbunden, welche ihrerseits durch einen dem Querströmungsfilter nachgeordneten Abscheider zum Rückhalten der Reinigungskörper mit dem Reinigungskreislauf in Strömungsverbindung steht. Um den erforderlichen Strömungsdruck für die Strahlpumpe zu erzielen, ist in der Zuleitung eine Pumpe angeordnet, welche den Teilvolumenstrom des Umlauföls, der über den Abscheider aus dem Reinigungskreislauf in die Zuleitung gelangt, auf einen ausreichend hohen Betriebsdruck zu verdichten.

Um bei dieser bevorzugten Weiterbildung eine möglichst gute Durchmischung des zu reinigenden Schmiermittels mit dem Umlauföl zu erreichen, mündet der Zulauf, durch den das zu reinigende Schmiermittel dem Reinigungskreislauf zugeführt wird, vorteilhafterweise in die Strahlpumpe.

Um die Reinigungsleistung der erfindungsgemäßen Einrichtung noch weiter zu erhöhen, weist diese in einer Weiterbildung, bei der Reinigungskörper verwendet werden, der Zuleitung in Förderrichtung der Pumpe gesehen nachgeordnet einen Bypass auf, der in den Zulauf vor der Strahlpumpe mündet, also einen Teilstrom des Umlauföls an der Strahlpumpe vorbei aus dem Reinigungskreislauf abführt und direkt mit dem durch den Zulauf in Richtung des Reinigungskreislaufes strömenden, zu reinigenden Schmiermittel im Zulauf vermischt. Um möglichst sauberes Umlauföl mit dem zu reinigenden Schmiermittel vorzumischen, ist in dem Bypass zusätzlich ein Hydrozyklon angeordnet, welches zum Reinigen des in den Zulauf einströmenden Umlauföls dient. Mit Hilfe des Hydrozyklons wird der Verlust von Umlauföl bzw. Schmiermittel beim Austrag des Ölschlammes verringert bzw. die Schmutzkonzentration des Austrages erhöht. So wird im Hydrozyklon die Partikelkonzentration für den austretenden Schlammstrom erhöht bzw. bei gleicher Austragskonzentration die Schmutzkonzentration im Umlauföl abgesenkt. Auf diese Weise wird ein weiter verbesserter Filtrationsfluss erreicht bzw. die Standzeit zwischen den Reinigungszyklen erhöht.

Bei einer Weiterbildung erfolgt die Einstellung der in die Zuleitung und den Bypass einströmenden Teilströme des Umlauföls mit Hilfe eines in der Zuleitung nach der Abzweigung des Bypass angeordneten ersten Ventils und eines in dem Bypass dem Hydrozyklon vorgeordneten zweiten Ventils. Die Ventile werden dabei aufeinander abgestimmt, wobei die Ventile entweder automatisch über eine Regelungseinrichtung verstellt werden, welche die Ventile basierend auf den Signalen zweier an geeigneter Stelle angeordneten Sensoren, beispielsweise in Strömungsrichtung gesehen unmittelbar nach den Ventilen angeordneten Volumenstromsensoren, regelt. Alternativ kann die Einstellung der Ventile auch mit Hilfe einer Steuerung nach vorgegebenen Steuerzyklen erfolgen.

Um das zu reinigende Schmiermittel in dem Zulauf auf die erwünschte Prozesstemperatur zu erwärmen, wird bei dieser Weiterbildung ferner vorgeschlagen, in dem Bypass einen extern zu beheizenden Wärmetauscher vorzusehen, der dem Hydrozyklon in Strömungsrichtung gesehen vorgeordnet ist.

Gemäß einem weiteren Aspekt betrifft die Erfindung ein Schmiermittelsystem, insbesondere für einen Motor, das mit einer erfindungsgemäßen Einrichtung zum Reinigen des Schmiermittels ausgestattet ist, bzw. ein Verfahren zum Reinigen von Schmiermittel.

Nachfolgend wird die Erfindung anhand dreier Ausführungsbeispiele unter Bezugnahme auf die Zeichnung näher erläutert. Darin zeigt, teilweise schematisiert:
- Fig. 1: einen hydraulischen Schaltplan eines ersten Ausführungsbeispieles einer erfindungsgemäßen Einrichtung zum Reinigen von Schmieröl, welche an einen Schmierölkreislauf eines Motors angeschlossen ist,
- Fig. 2: einen hydraulischen Schaltplan eines zweiten Ausführungsbeispieles einer erfindungsgemäßen Einrichtung, deren Aufbau im wesentlichen dem Aufbau der in Fig. 1 gezeigten Ausführungsform entspricht, jedoch mit einer Erweiterung zum Betreiben der Einrichtung mit Reinigungskörpern ergänzt ist, und
- Fig. 3: einen hydraulischen Schaltplan eines dritten Ausführungsbeispieles einer erfindungsgemäßen Einrichtung, deren Aufbau im wesentlichen dem Aufbau der in Fig. 2 gezeigten Ausführungsform entspricht, jedoch mit einem Hydrozyklon ergänzt ist.

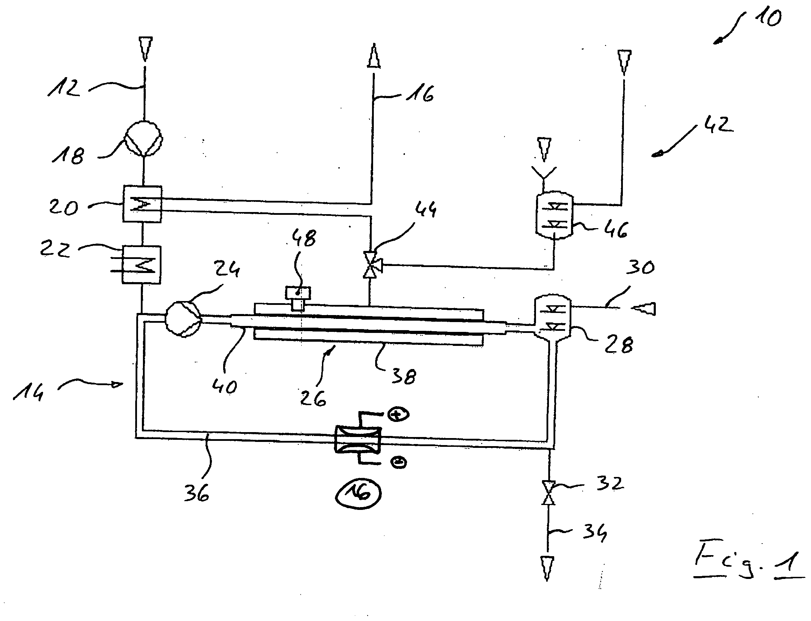

Fig. 1 zeigt den hydraulischen Schaltplan eines ersten Ausführungsbeispieles einer erfindungsgemäßen Einrichtung 10 zum Reinigen von Schmieröl, die an einen Schmierölkreislauf (nicht dargestellt) eines Motors angeschlossen ist.

Die Einrichtung 10 hat einen mit dem Schmierölkreislauf verbundenen Zulauf 12, durch welche eine Teilmenge des im Schmierölkreislaufes zirkulierenden Schmieröls in einen Reinigungskreislauf 14 der Einrichtung 10 abgeleitet werden kann. Die Teilmenge kann beispielsweise mit Hilfe eines nicht dargestellten Ventils reguliert werden. Des weiteren ist am Reinigungskreislauf 14 ein Rücklauf 16 vorgesehen, durch den gereinigtes Schmieröl aus der Einrichtung 10 wieder in den Schmierölkreislauf zurückgeleitet wird.

Zwischen dem mit dem Schmierölkreislauf verbundenen Einlass des Zulaufes 12 und dem in den Reinigungskreislauf 14 mündenden Ende ist in dem Zulauf 12 eine Pumpe 18 gesehen angeordnet, welche das zu reinigende Schmieröl mit einem Betriebsdruck von etwa 6 bar, der dem im Reinigungskreislauf 14 maximal zulässigen Druck entspricht, in den Reinigungskreislauf 14 fördert.

Die Pumpe 18 ist als Verdrängerpumpe mit konstanter oder geregelter Drehzahl ausgebildet und kontrolliert die dem Reinigungskreislauf 14 zugeführte Schmierölmenge. Da die in das Schmieröl übereingebrachte Schmutzfracht häufig über der Zeit konstant ist, wird im Ausführungsbeispiel durch die Pumpe 18 ein konstanter Volumenstrom aus dem Schmierölkreislauf abgeführt. Der Gleichgewichtsdruck, der sich infolge dieses konstanten Volumenstromes im Reinigungskreislauf einstellt, kann als Indikator für ein variables Rückspülreinigungsintervall verwendet werden, das nachfolgend näher erläutert wird.

In Förderrichtung der Pumpe 18 nachgeordnet ist ein erster Wärmetauscher 20, mit dem das zu reinigende Schmieröl auf eine höhere Temperatur erwärmt wird. Der Wärmetauscher 20 ist als Gegenstromwärmetauscher ausgebildet und wird von dem durch den Rücklauf 16 in den Schmierölkreislauf zurückströmenden gereinigten Schmieröl im Gegenstrom erwärmt. Auf diese Weise wird einerseits das gereinigte Schmieröl wieder auf eine für den Schmierölkreislauf geeignete Temperatur nahe der Betriebstemperatur des Schmierölkreislaufes abgekühlt, während gleichzeitig das zu reinigende Schmieröl unter Einssparung von Energie auf eine höhere Temperatur erwärmt wird.

Dem ersten Wärmetauscher 20 ist ein zweiter Wärmetauscher 22 nachgeordnet, welcher mittels einer Abgaswärme des Motors das vom ersten Wärmetauscher 20 bereits vorgewärmte Schmieröl auf eine Prozesstemperatur von etwa 120°C erwärmt. Um eine möglichst genaue Einstellung der Prozesstemperatur zu gewährleisten, ist dem zweiten Wärmetauscher 22 gegebenenfalls ein Temperatursensor (nicht dargestellt) nachgeordnet, der die Temperatur des Schmieröls erfasst und dessen Signal von einer Regelungseinheit (nicht dargestellt) verwendet wird, um die Heizleistung des zweiten Wärmetauschers 22 in Abhängigkeit von der Temperatur des Schmieröls unmittelbar vor Eintritt in den Reinigungskreislauf 14 zu regeln.

Der Reinigungskreislauf 14 ist als geschlossener Kreislauf ausgebildet, in welchem Schmieröl als Umlauföl umgewälzt wird. Zu diesem Zweck ist im Reinigungskreislauf 14 unmittelbar nach der Mündung des Zulaufes 12 eine Pumpe 24 angeordnet, welche das im Reinigungskreislauf 14 enthaltene Umlauföl sowie das zu reinigende Schmieröl, das aus dem Zulauf 12 in den Reinigungskreislauf 14 einströmt und sich dort mit dem Umlauföl vermengt, in Richtung eines Querströmungsfilters 26 fördert. Dem Querströmungsfilter 26 nachgeordnet ist ein Ausgleichsbehälter 28 zur Aufnahme des Rückspülvolumens bei einer nachfolgend beschriebenen automatischen Reinigung, über den durch eine Einlass 30 auch zusätzliches Schmieröl in den Reinigungskreislauf 14 eingebracht werden kann. In Förderrichtung gesehen nach dem Ausgleichsbehälter 28 ist ein durch ein Sperrventil 32 absperrbarer Ablauf 34 vorgesehen. Ein weiterer Leitungsabschnitt 36, in den der Zulauf 12 mündet, schließt den Reinigungskreislauf 14.

Der Querströmungsfilter 26 hat eine nach außen hin abgeschlossene Filtratkammer 38, welche mit dem Rücklauf 16 in Strömungsverbindung steht. In der Filtratkammer 38 sind mehrere als Filtermembrane dienende Filterrohre 40 aufgenommen, die mit dem Reinigungskreislauf 14 in Strömungsverbindung stehen und von dem Umlauföl durchströmt sind. Die Innenseiten der Filterrohre 40 weisen eine feinporige Oberflächenfiltrationsschicht auf.

Im Reinigungsbetrieb werden die beiden Pumpen 18 und 24 aktiviert, so dass die gewünschte Teilmenge zu reinigenden Schmieröls aus dem Schmierölkreislauf gefördert wird, während gleichzeitig das Umlauföl im Reinigungskreislauf 14 umgewälzt wird. Das in den Reinigungskreislauf 14 durch den Zulauf 12 einströmende Schmieröl vermischt sich mit dem Umlauföl und strömt weiter in Richtung Querströmungsfilter 26, wobei ein Betriebsdruck von etwa 6 bar aufrecht erhalten wird.

Sobald das Umlauföl mit seinem Betriebsdruck von etwa 6 bar durch den Querströmungsfilter 26 strömt, wird ein Teil des Umlauföls durch die feinporigen Filterrohre 40 gepresst und dabei gereinigt, gelangt in die Filtratkammer 38, strömt von dort in den Rücklauf 16 und schließlich in den Schmierölkreislauf. Dabei werden im Umlauföl enthaltene Schwebstoffe, wie Verunreinigungen, Verbrennungsrückstände und Abriebe, beim Durchtritt durch die Filterrohre 40 in die Filtratkammer 38 ausgefiltert und bleiben an der Innenseite der Filterrohre 40 zurück. Durch die Strömungsgeschwindigkeit des Umlauföls, die durch die Pumpe 24 verursacht wird, entstehen an der Innenseite der Filterrohre 40 Scherkräfte, welche den Aufbau eines Filterkuchens verhindern, zumindest aber reduzieren und dabei den spezifischen Filterdurchfluss durch die Filterrohre 40 stabilisieren. Dabei werden die in den Filterrohren 40 ausgefilterten Schwebstoffe von dem Umlauföl mitgerissen.

Sobald der Anteil an Verunreinigungen im Umlauföl einen vorgegebenen Grenzwert erreicht hat, wird das Sperrventil 32 geöffnet und verunreinigtes Umlauföl aus dem Ablauf 34 abgelassen, welches anschließend der weiteren Aufbereitung und Entsorgung zugeführt wird. Um die abgelassene Menge Umlauföl auszugleichen, kann gleichzeitig frisches, unverschmutztes Schmieröl über den Einlass 30 und den Ausgleichsbehälter 28 in den Reinigungskreislauf 14 gefördert oder, bevorzugt, über das Nachfüllsystem (nicht dargestellt) des Schmierölkreislaufes ausgeglichen werden. Die Menge, die als verunreinigtes Umlauföl, insbesondere als Ölschlamm, abgegeben und durch unverschmutztes Umlauföl ersetzt wird, ist dabei so eingestellt, dass die Differenzschmutzmenge der Volumenströme an zu reinigendem Schmieröl, das durch den Zulauf 12 in den Reinigungskreislauf einströmt, minus gereinigtem Schmieröl, das durch den Rücklauf 16 aus dem Reinigungskreislauf 14 abströmt, durch den Schmutzgehalt der Menge des als Ölschlamm abgeführten verunreinigten Umlauföls in ein Gleichgewicht geführt sind.

Auf diese Weise wird das Schmieröl mit vergleichsweise geringem Aufwand und hohem Wirkungsgrad gereinigt, wobei die zu ersetzende Menge an Schmieröl, die während des Reinigungsprozesses als Ölschlamm verloren geht, verglichen mit den im Stand der Technik verwendeten Reinigungstechniken vermindert ist.

Um einen ausreichenden Gleichgewichtszustand bei einer ausreichend hohen Filtrationsleistung sicherzustellen, ist die Einrichtung 10 ferner mit einer Spüleinrichtung 42 ausgestattet. Die Spüleinrichtung 42 steht über ein Drei-Wege-Ventil 44 mit dem Rücklauf 16 in Strömungsverbindung und weist einen Aufnahmebehälter 46 für sauberes Schmieröl auf. Der Aufnahmebehälter 46 steht mit einer Druckluftleitung in Strömungsverbindung. Um die Spülleistung der Spüleinrichtung 42 zu unterstützen, sind am Querströmungsfilter 26 ferner mehrere Ultraschallsonden 48 befestigt.

Für das Spülen des Querströmungsfilters 26 wird zunächst die Pumpe 18 des Abzweigs 12 abgeschaltet. Während der Systemdruck abnimmt, läuft hoch konzentrierte Schmierölphase über den Ablauf 34 ab, bis das Sperrventil 32 diesen Ablauf 34 sperrt. Anschließend wird der Reinigungskreislauf 14 über den Anschluss 30 druckentlastet und dann das Drei-Wege-Ventil 44 so geschaltet, dass die Strömungsverbindung zwischen dem mit Druckluft beaufschlagten Aufnahmebehälter 46 und Filtratkammer 38 freigegeben ist, während der Rücklauf 16 selbst gesperrt ist. Die Pumpe 24 wird weiterhin so betrieben, dass das Umlauföl im Reinigungskreislauf 14 zirkuliert. Danach wird mit Druckluft das im Aufnahmebehälter 46 enthaltene Schmieröl in die Filtratkammer 38 gefördert, wobei das Schmieröl durch die porösen Filterschichten der Filterrohre 40 gedrückt wird und dabei in den Filterschichten haftende Verunreinigungen entfernt, welche dann vom vorbeiströmenden Umlauföl mitgerissen werden. Um die Reinigungswirkung zu erhöhen, wird die Druckluft pulsierend eingeblasen, so dass im Schmieröl entsprechende Stosswellen oder Druckimpulse entstehen. Zusätzlich werden die Ultraschallsonden 48 aktiviert, welche entsprechende Ultraschallwellen in das Schmieröl abgeben.

Die Druckluft wird solange in das System eingeblasen, bis die Druckluft über die Filterrohre 40 in den Reinigungskreislauf 14 einströmt, wobei auch letzte Verunreinigungen aus den Filterrohren 40 entfernt werden. Dabei wird das Volumen des Rückspülmediums durch Niveauänderung im Ausgleichsbehälter 28 aufgenommen bzw. ausgeglichen. Die Druckluft wird vom vorbeiströmenden Umlauföl mitgerissen und sammelt sich im Ausgleichsbehälter 28, aus dem sie drucklos abgeleitet wird. Anschließend ist der Spülvorgang beendet. Durch Druckbeaufschlagung des Reinigungskreislaufes 14 über den Einlass 30 wird gereinigtes Öl in den Aufnahmebehälter 46 zurückgefördert, bis dessen Sollfüllstand erreicht und der Aufnahmebehälter 46 für einen neuen Spülvorgang bereit ist. Danach wird das Drei-Wege-Ventil 44 wieder umgeschaltet und die Ölzufuhr über die Pumpe 18 aufgenommen.

Die zuvor geschilderte Reinigung, während der der Wärmetauscher 22 bevorzugt deaktiviert ist, kann während des Betriebes der Einrichtung 10 in regelmäßigen Intervallen oder in Abhängigkeit von der Filtratleistung, eines Systemdruckes oder einer Reinigungsmenge erfolgen. Soll die Anlage vollständig gereinigt werden, muss das Umlauföl abgelassen und über die Spüleinrichtung entsprechende Reinigungsflüssigkeiten eingebracht werden.

Durch eine (nicht dargestellte) elektrostatisch wirkende Zusatzeinrichtung im Umlaufsystem, beispielsweise in dem Leitungsabschnitt 36, kann die Agglomeration von Feinstpartikeln unterstützt und damit die Standzeit des Querstromfilters verbessert werden.

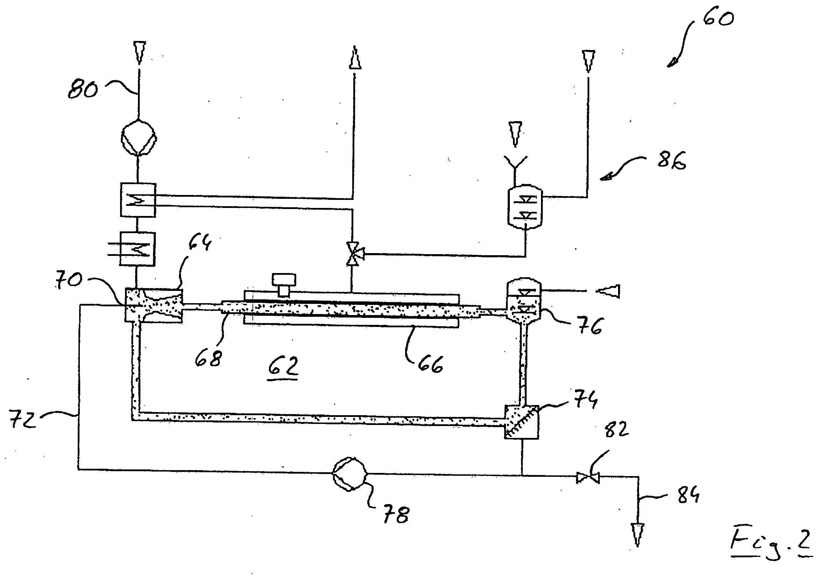

In Fig. 2 ist eine zweite Ausführungsform einer erfindungsgemäßen Einrichtung 60 gezeigt. Der Aufbau der Einrichtung 60 entspricht im wesentlichen dem Aufbau der in Fig. 1 gezeigten Einrichtung 10. Wesentlicher Unterschied zu dieser ist, dass in dem Reinigungskreislauf 62 anstelle der Pumpe 24 eine Strahlpumpe 64 vor dem Querströmungsfilter 66 angeordnet ist. Grund hierfür ist, dass im Umlauföl kleine Reinigungskörper enthalten sind (durch die Punktierung dargestellt), welche während des Umlaufens des Umlauföls durch die Filterrohre 68 gefördert werden, um an deren Innenseiten anhaftende Verunreinigungen zu entfernen.

Die Strahlpumpe 64 hat einen Treibanschluss 70, der über eine Zuleitung 72 mit Umlauföl versorgt wird. Die Zuleitung 72 steht hierzu mit einem Abscheider 74 in Strömungsverbindung, welcher in Strömungsrichtung gesehen dem Ausgleichsbehälter 76 des Reinigungskreislaufes 62 nachgeordnet ist. Der Abscheider 74 ermöglicht eine Auftrennung des Umlaufölstromes in zwei Volumenströme, wobei einer der Volumenströme die Reinigungskörper enthält, während der zweite Volumenstrom, der in die Zuleitung 72 einströmt, keine Reinigungskörper enthält.

Um den für den Betrieb der Strahlpumpe 64 erforderlichen Betriebsdruck einzustellen, ist ferner in der Zuleitung 72 eine Pumpe 78 angeordnet, die das Umlauföl in der Zuleitung 72 in Richtung der Strahlpumpe 64 fördert.

Die Arbeitsweise der Einrichtung 60 entspricht im wesentlichen dem der Einrichtung 10, lediglich mit dem Unterschied, dass die Umwälzung des Umwälzöls und der Reinigungskörper durch die Strahlpumpe 64 erfolgt und der Zulauf 80 in die Strahlpumpe 64 mündet. Durch die Strahlpumpe 64 wird auf diese Weise einerseits einer sehr gute Durchmischung des zu reinigenden Schmieröls mit dem Umlauföl erreicht, während andererseits an den Reinigungskörpern anhaftende Verunreinigungen, welche von den Reinigungskörpern aus den Filterrohren 68 entfernt wurden, sich von den Reinigungskörpern lösen. Das Ablassen des Ölschlammes erfolgt über den durch ein Sperrventil 82 verschlossenen, von der Zuleitung 72 vor der Pumpe 78 vorgesehenen Ablauf 84 in der gleichfalls unter Bezugnahme auf die Einrichtung 10 beschriebenen Art. In gleicher Weise ist die Einrichtung auch mit einer vergleichbar arbeitenden Spüleinrichtung 86 ausgestattet.

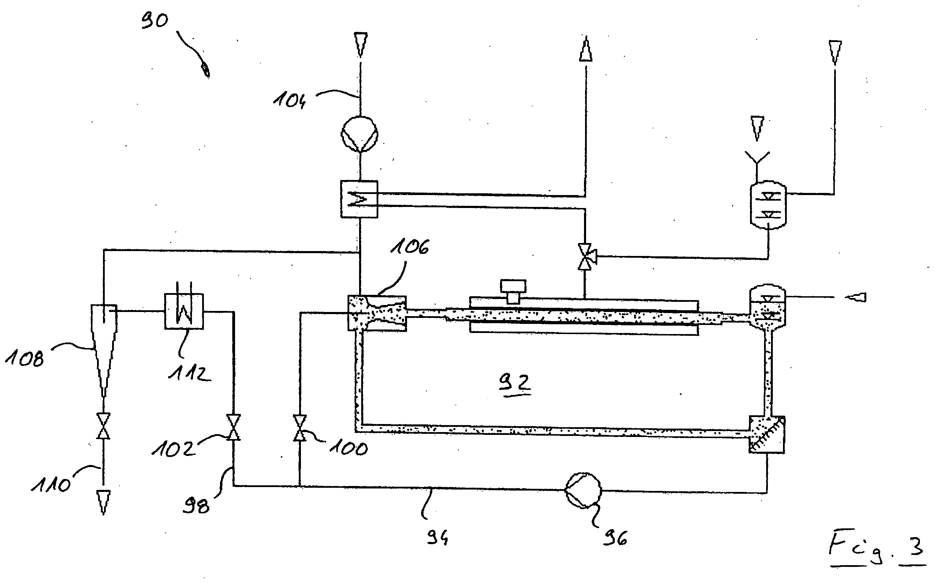

Fig. 3 zeigt schließlich ein drittes Ausführungsbeispiel einer erfindungsgemäßen Einrichtung 90 zum Reinigen von Schmieröl. Der Aufbau des Reinigungskreislaufes 92 dieser Einrichtung 90 entspricht im wesentlichen dem Aufbau des Reinigungskreislaufes 62 der zuvor geschilderten Einrichtung 60. Allerdings weist die Zuleitung 94 einen in Förderrichtung der Pumpe 96 nachgeordneten Bypass 98 auf, wobei die in die Zuleitung 94 und den Bypass 98 einströmenden Teilströme mit Hilfe zweier nach der Abzweigung des Bypass 98 vorgesehene Ventile 100 und 102 geregelt werden können.

Der Bypass 98 mündet in den Zulauf 104 vor der Strahlpumpe 106, so dass ein Teilstrom des Umlauföls an der Strahlpumpe 106 vorbei aus dem Reinigungskreislauf 92 abgeführt und direkt mit dem durch den Zulauf 104 in Richtung des Reinigungskreislaufes 92 strömenden, zu reinigenden Schmieröl vermischt wird. Um möglichst sauberes Umlauföl mit dem zu reinigenden Schmieröl vorzumischen, ist in dem Bypass 98 zusätzlich ein Hydrozyklon 108 angeordnet, mit dem das in den Zulauf 104 einströmende Umlauföl gereinigt wird, wobei der Ölschlamm aus dem Hydrozyklon 108 über einen absperrbaren Ablauf 110 abgelassen wird. Das Hydrozyklon 108 scheidet vorzugsweise große und/oder schwere Teilchen ab. Dem Hydrozyklon 108 ist in Strömungsrichtung gesehen noch ein extern betriebener Wärmetauscher 112 vorgeschaltet, mit dem das Umlauföl auf eine gewünschte Prozesstemperatur erwärmt wird. Durch die Verschiebung der Wärmezufuhr vom Wärmetauscher 22 zum Wärmetauscher 112 kann, da im wesentlichen nur das Hydrozyklon die Temperatur beschränkt, vorteilhaft eine niedrigere Viskosität und Dichte des Öls eingestellt und damit ein besserer Wirkungsgrad des Hydrozyklon 108 erzielt werden, während die Betriebstemperatur des Umlauföles niedrig bleibt.

Mit Hilfe des Hydrozyklons 108 wird der Verlust von Umlauföl bzw. Schmieröl beim Austrag des Ölschlammes verringert bzw. die Schmutzkonzentration des Austrages erhöht. So wird im Hydrozyklon 108 die Partikelkonzentration für den austretenden Schlammstrom erhöht bzw. bei gleicher Austragskonzentration die Schmutzkonzentration im Umlauföl abgesenkt. Auf diese Weise wird ein weiter verbesserter Filtrationsfluss erreicht bzw. die Standzeit zwischen den Reinigungszyklen erhöht.

Die beschriebenen Ausführungsbeispiele stellen nur drei Möglichkeiten dar, wie die erfindungsgemäße Einrichtung verwirklicht werden kann. So ist es denkbar mehrere Querströmungsfilter parallel oder in Reihe zu schalten. Ferner ist es denkbar anstelle der Filterrohre plattenförmige Filtermembrane vorzusehen.

### Bezugszeichenliste:

- 10: Einrichtung zum Reinigen von Schmieröl
- 12: Zulauf
- 14: Reinigungskreislauf
- 16: Rücklauf
- 18: Pumpe
- 20: erster Wärmetauscher
- 22: zweiter Wärmetauscher
- 24: Pumpe
- 26: Querströmungsfilter
- 28: Ausgleichsbehälter
- 30: Einlass
- 32: Sperrventil
- 34: Ablauf
- 36: Leitungsabschnitt
- 38: Filtratkammer
- 40: Filterrohre
- 42: Spüleinrichtung
- 44: Drei-Wege-Ventil
- 46: Aufnahmebehälter
- 48: Ultraschallsonde

- 60: Einrichtung zum Reinigen von Schmieröl
- 62: Reinigungskreislauf
- 64: Strahlpumpe
- 66: Querströmungsfilter
- 68: Filterrohre
- 70: Treibanschluss
- 72: Zuleitung
- 74: Abscheider
- 76: Ausgleichsbehälter
- 78: Pumpe
- 80: Zulauf
- 82: Sperrventil
- 84: Ablauf
- 86: Spüleinrichtung

- 90: Einrichtung zum Reinigen von Schmieröl
- 92: Reinigungskreislauf
- 94: Zuleitung
- 96: Pumpe
- 98: Bypass
- 100: Ventil
- 102: Ventil
- 104: Zulauf
- 106: Strahlpumpe
- 108: Hydrozyklon
- 110: Ablauf
- 112: Wärmetauscher

## Patentansprüche

1. Einrichtung zum Reinigen von Schmiermittel, welches in einem Schmiermittelkreislauf, eines Motors, eines Verdichters und/oder eines Turboladers, zirkuliert, mit einem mit dem Schmiermittelkreislauf zu verbindenden Zulauf (12; 80; 104), durch welchen eine Teilmenge des im Schmiermittelkreislauf zirkulierenden Schmiermittels zum zumindest teilweise Entfernen von im Schmiermittel enthaltenden Verunreinigungen der Reinigungseinrichtung (10; 60; 90) zuzuführen ist, und einem mit dem Schmiermittelkreislauf zu verbindenden Rücklauf (16) zum Zurückführen des gereinigten Schmiermittels in den Schmiermittelkreislauf, mit einem Reinigungskreislauf (14; 62; 92), in welchen der Zulauf (12; 80; 104) mündet, mit einer Fördereinrichtung (24; 64; 106) zum Umwälzen eines im Reinigungskreislauf (14; 62; 92) enthaltenen Umlauföls, welches sich mit dem durch den Zulauf (12; 80; 104) dem Reinigungskreislauf (14; 62; 92) zuzuführenden, zu reinigenden Schmiermittel vermengt, und mit mindestens einem der Fördereinrichtung (24; 64, 106) in Förderrichtung gesehen nachgeordneten Querströmungsfilter (26; 66), der mit mindestens einer Filtermembran (40; 68) versehen ist, an welcher das Gemisch aus Umlauföl und Schmiermittel zum Filtern vorbeiströmt, wobei ein Teil des Gemisches unter einem von der Fördereinrichtung erzeugten Druck durch die Filtermembran (40) in eine mit dem Rücklauf (16) verbundene Filtratkammer (38) strömt,
**dadurch gekennzeichnet, dass** in dem Zulauf (12; 80, 104) mindestens ein Wärmetauscher (20) zum Erwärmen des zu reinigenden Schmiermittels angeordnet ist und dass zwei Wärmetauscher (20, 22) vorgesehen sind, wobei einer der Wärmetauscher, vorzugsweise der in Strömungsrichtung gesehen erste Wärmetauscher, ein Wärmetauscher (20) ist, welcher in den Rücklauf (16) des gereinigten Schmiermittels derart eingebunden ist, dass das in den Schmiermittelkreislauf zurückzuführende gereinigte Schmiermittel das in den Reinigungskreislauf (14; 62; 92) zu leitende, zu reinigende Schmiermittel erwärmt.

2. Einrichtung nach Anspruch 1, **dadurch gekennzeichnet, dass** der Querströmungsfilter (26; 66) in der Filtratkammer (38) als Filtermembran mindestens ein Filterrohr (40; 68) aufweist, durch das das Gemisch zum Filtrieren hindurchströmt und auf dessen Innenseite eine feinporige Oberflächenfiltrationsschicht vorgesehen ist.

3. Einrichtung nach Anspruch 1 oder 2, **dadurch gekennzeichnet, dass** der Reinigungskreislauf (14; 62; 92) einen Einlass (30) für frisches Umlauföl, welcher vorzugsweise über einen Ausgleichsbehälter (28) mit dem Reinigungskreislauf (14) in Verbindung steht, und einen mit einem Ventil (32; 78) versehenen Ablauf (34; 80) zum Abführen verschmutzen Umlauföls aus dem Reinigungskreislauf (14; 62; 92) aufweist.

4. Einrichtung nach Anspruch 1, 2 oder 3, **dadurch gekennzeichnet, dass** in dem Zulauf (12; 80, 104) eine Fördereinrichtung, vorzugsweise eine Pumpe (18) vorgesehen ist, welche das abgezweigte, zu reinigende Schmiermittel mit einem vorbestimmten Förderdruck in den Reinigungskreislauf (14; 62; 92) fördert.

5. Einrichtung nach Anspruch 1, 2, 3 oder 4, **dadurch gekennzeichnet, dass** der andere Wärmetauscher ein extern beheizter Wärmetauscher (22) ist.

6. Einrichtung nach einem der vorhergehenden Ansprüche, **dadurch gekennzeichnet, dass** eine Spüleinrichtung (42; 86) zum Spülen des Querströmungsfilters (26; 66) mit einem Spülfluid vorgesehen ist, welche vorzugsweise über ein Drei-Wege-Ventil (44) und den Rücklauf (16) mit dem Querströmungsfilter (26; 66) in Strömungsverbindung steht.

7. Einrichtung nach Anspruch 6, **dadurch gekennzeichnet, dass** die Spüleinrichtung (42; 86) einen Behälter (46) für das Spülfluid, vorzugsweise gereinigtes Schmiermittel, aufweist, welches mit Hilfe eines Hilfsmediums, vorzugsweise Druckluft, entgegen der Filtrationsrichtung durch die Filtermembran (40; 68) zu fördern ist.

8. Einrichtung nach einem der vorhergehenden Ansprüche, **dadurch gekennzeichnet, dass** am Querströmungsfilter (26; 66) mindestens eine Ultraschallsonde (48) vorgesehen ist.

9. Einrichtung nach einem der vorhergehenden Ansprüche, **dadurch gekennzeichnet, dass** das Umlauföl im Reinigungskreislauf (62; 92) Reinigungskörper enthält, dass die Fördereinrichtung des Reinigungskreislaufes (62; 92) eine Strahlpumpe (64; 106) ist, deren Treibanschluss (70) mit einer Zuleitung (72; 94) verbunden ist, welche durch einen dem Querströmungsfilter (66) nachgeordneten Abscheider (74) mit dem Reinigungskreislauf (62; 92) in Strömungsverbindung steht, und dass eine Pumpe (78; 96) in der Zuleitung (72; 94) einen Teil des Umlauföls über den Abscheider (74) aus dem Reinigungskreislauf (62; 92) zum Betreiben der Strahlpumpe (64; 106) fördert.

10. Einrichtung nach Anspruch 9, **dadurch gekennzeichnet, dass** der Zulauf (80; 104) in die Strahlpumpe (64; 106) mündet.

11. Einrichtung nach Anspruch 9 oder 10, **dadurch gekennzeichnet, dass** die Zuleitung (94) in Förderrichtung der Pumpe (96) gesehen nachgeordnet ein in dem Zulauf (104) vor der Strahlpumpe (106) mündenden Bypass (98) aufweist, in welchem ein Hydrozyklon (108) zum Reinigen des in den Zulauf (104) einströmenden Umlauföls angeordnet ist.

12. Einrichtung nach Anspruch 11, **dadurch gekennzeichnet, dass** die Einstellung der in die Zuleitung (94) und den Bypass (98) einströmenden Teilströme mit Hilfe eines in der Zuleitung (94) nach der Abzweigung des Bypass (98) angeordneten ersten Ventils (100) und eines in dem Bypass (98) dem Hydrozyklon (108) vorgeordneten zweiten Ventils (102) einstellbar ist.

13. Einrichtung nach Anspruch 11 oder 12, **dadurch gekennzeichnet, dass** dem Hydrozyklon (108) in dem Bypass (98) in Strömungsrichtung gesehen ein extern zu beizender Wärmetauscher (112) vorgeordnet ist.

14. Schmiermittelsystem, für einen Motor, einen Verdichter und/oder einen Turbolader, mit einer Einrichtung zum Reinigen des Schmiermittels, **dadurch gekennzeichnet, dass** die Einrichtung (10; 60; 90) nach einem der Ansprüche 1 bis 13 ausgebildet ist.

15. Verfahren zum Reinigen von Schmiermittel, welches in einem Schmiermittelkreislauf zirkuliert, mittels einer Einrichtung nach einem der Ansprüche 1 bis 13, mit den Schnitten:
Zuführen des zu reinigenden Schmiermittels in den Reinigungskreislauf;
Umwälzen des mit dem Schmiermittel vermengten Umlauföls;
Rückführen gefilterten Schmiermittels aus dem Reinigungskreislauf in den Schmiermittelkreislauf; und
Abführen verschmutzten Umlauföls, insbesondere in Form von Schlamm, aus dem Reinigungskreislauf.

16. Verfahren zum Spülen des Querströmungsfilters einer Einrichtung nach Anspruch 6, **dadurch gekennzeichnet, dass** der Querströmungsfilter diskontinuierlich in Intervallen gespült wird.

## Claims

1. A device for cleaning lubricant, which circulates in a lubricant circuit of an engine, of a compressor and/or of a turbocharger, with an inflow (12; 80; 104) to be connected to the lubricant circuit, through which a part quantity of the lubricant circulating in the lubricant circuit is to be conducted to the cleaning device (10; 60; 90) for the at least partial removal of contaminations contained in the lubricant, and a return (16) to be connected to the lubricant circuit for returning the cleaned lubricant into the lubricant circuit, with a cleaning circuit (14; 62; 92), in which the inflow (12; 80; 104) opens, with a conveying device (24; 64; 106) for circulating a circulating oil contained in the cleaning circuit (14; 62; 92), which blends with the lubricant to be cleaned and to be fed through the inflow (12; 80; 104) to the cleaning circuit (14; 62; 92), and with at least a cross flow filter (26; 62) which seen in conveying direction is arranged downstream of the conveying device (24; 62; 106), which is provided with at least one filter membrane (40, 68), which the mixture of circulating oil and lubricant flows past for filtering, wherein a part of the mixture, under a pressure generated by the conveying device, flows through the filter membrane (40) into a filtrate chamber (38) that is connected to the return (16), **characterized in that** in the inflow (12; 80; 104) at least one heat exchanger (20) for heating the lubricant to be cleaned is arranged and **in that** two heat exchangers (20, 22) are provided, wherein one of the heat exchangers, preferentially the, seen in flow direction, first heat exchanger is a heat exchanger (20) which is incorporated in the return (16) of the cleaned lubricant in such a manner that the cleaned lubricant to be returned into the lubricant circuit heats the lubricant to be cleaned and to be conducted into the cleaning circuit (14; 62; 92 ) .

2. The device according to Claim 1, **characterized in that** the cross flow filter (26; 66) in the filtrate chamber (38) as filter membrane comprises at least one filter tube (40; 68) through which the lubricant flows for filtering and on the inside of which a fine-pored surface filtration layer is provided.

3. The device according to Claim 1 or 2, **characterized in that** the cleaning circuit (14, 62; 92) comprises an inlet (30) for fresh circulating oil, which is preferentially connected to the cleaning circuit (14) via an equalisation vessel (28), and a drain (34; 80) provided with a valve (32; 78) for discharging dirty circulating oil from the cleaning circuit (14; 62; 92 ) .

4. The device according to Claim 1, 2 or 3, **characterized in that** in the inflow (12; 80; 104) a delivery device, preferentially a pump (18) is provided, which delivers the branched-off lubricant to be cleaned with a predetermined delivery pressure into the cleaning circuit (14; 62; 92).

5. The device according to Claim 1, 2, 3 or 4, **characterized in that** the other heat exchanger is an externally heated heat exchanger (22).

6. The device according to any one of the preceding claims, **characterized in that** a flushing device (42; 86) for flushing the cross-filter (26; 66) with a flushing fluid is provided, which is preferentially flow-connected to the cross-flow filter (26; 66) via a three-way valve (44) and the return (16).

7. The device according to Claim 6, **characterized in that** the flushing device (42; 86) comprises a vessel (46) for the flushing fluid, preferentially cleaned lubricant, which is to be delivered through the filter membrane (40; 68) against the filtration direction with the help of an auxiliary medium, preferentially compressed air.

8. The device according to any one of the preceding claims, **characterized in that** on the cross-flow filter (26; 66) at least one ultrasound probe (48) is provided.

9. The device according to any one of the preceding claims, **characterized in that** the circulating oil in the cleaning circuit (62; 92) contains cleaning bodies, **in that** the delivery device of the cleaning circuit (62; 92) is a jet pump (64; 106), the driving connection (70) of which is connected to a supply line (72; 94), which is flow-connected with the cleaning circuit (62; 92) by a separator (74) which is arranged downstream of the cross-flow filter (66), and **in that** a pump (78; 96) in the supply line (72; 94) delivers a part of the circulating oil via the separator (74) from the cleaning circuit (62; 92) for operating the jet pump (64; 106) .

10. The device according to Claim 9, **characterized in that** the inflow (80; 104) opens into the jet pump (64; 106) .

11. The device according to Claim 9 or 10, **characterized in that** the supply line (94) comprises a bypass (98) which seen in delivery direction of the pump (96) is arranged downstream which opens into the inflow (104) in front of the jet pump (106), in which a hydrocyclone (108) for cleaning the circulating oil flowing into the inflow (104) is arranged.

12. The device according to Claim 11, **characterized in that** the adjustment of the part flows flowing into the supply line (94) and the bypass (98) is adjustable with the help of a first valve (100) arranged in the supply line (94) after the branch-off of the bypass (98) and a second valve (102) arranged in the bypass (98) in front of the hydrocyclone (108).

13. The device according to Claim 11 or 12, **characterized in that** a heat exchanger (112) to be externally heated is arranged in the bypass (98)seen in flow direction upstream of the hydrocyclone.

14. A lubricant system for an engine, a compressor and/or a turbocharger, with a device for cleaning the lubricant, **characterized in that** the device (10; 60; 90) is designed according to any one of the Claims 1 to 13.

15. A method for cleaning lubricant which circulates in a lubricant circuit, by means of a device according to any one of the Claims 1 to 13, with the steps:
feeding the lubricant to be cleaned into the cleaning circuit;
circulating the circulating oil mixed with the lubricant;
returning filtered lubricant from the cleaning circuit into the lubricant circuit; and
discharging dirty circulating oil, in particular in the form of sludge, from the cleaning circuit.

16. A method for flushing the cross-flow filter of a device according to Claim 6, **characterized in that** the cross-flow filter is discontinuously flushed at intervals.

## Revendications

1. Dispositif de purification de lubrifiant, qui est mis en circulation dans un circuit de lubrifiant d'un moteur, d'un compresseur et/ou d'un turbocompresseur, comportant une conduite d'amenée (12 ;80 ;104) à relier au circuit de lubrifiant, à travers laquelle une quantité partielle du lubrifiant mis en circulation dans le circuit de lubrifiant est réintroduite afin d'éliminer au moins partiellement les impuretés du dispositif de purification (10 ;60 ;90) contenues dans le lubrifiant et une conduite de retour (16) à relier au circuit de lubrifiant pour réintroduire le lubrifiant purifié dans le circuit de lubrifiant, comportant un circuit de lubrification (14 ;62 ;92) dans lequel débouche la conduite d'amenée (12 ;80 ;104), comportant un dispositif de transport (24 ;64 ;106) pour faire circuler une huile en circulation contenue dans le circuit de purification (14 ;62 ;92), qui se mélange avec le lubrifiant à purifier, réintroduit dans le circuit de purification (14 ;62 ;92) à travers la conduite d'amenée (12 ;80 ;104), et comportant au moins un filtre d'écoulement traversant (26 ;66) disposé en aval du dispositif de transport (24 ;64 ;106) vu dans la direction de transport, qui est pourvu d'au moins une membrane de filtre (40 ;68), sur laquelle le mélange d'huile en circulation et de lubrifiant passe dans le filtre, dans lequel une partie du mélange s'écoule sous une pression générée par le dispositif de transport à travers la membrane de filtre (40) dans une chambre de filtrat (38) reliée à la conduite de retour (16), **caractérisé en ce que** dans la conduite d'amenée (12 ;80 ;104) au moins un échangeur thermique (20) pour réchauffer le lubrifiant à purifier est disposé et **en ce que** deux échangeurs thermiques (20,22) sont prévus, dans lequel un des échangeurs thermiques, de préférence le premier échangeur thermique vu dans la direction d'écoulement, est un échangeur thermique (20), qui est intégré dans la conduite de retour (16) du lubrifiant à purifier de telle sorte que le lubrifiant purifié à réintroduire dans le circuit de lubrifiant réchauffe le lubrifiant à purifier, à guider dans le circuit de purification (14 ; 62 ; ;92).

2. Dispositif selon la revendication 1, **caractérisé en ce que** le filtre d'écoulement transversal (26 ;66) présente dans la chambre de filtrat (38) comme membrane de filtre au moins un tube filtrant (40 ;68), à travers lequel le mélange à filtrer s'écoule et dont le côté intérieur est pourvu d'une couche de filtration de surface à pores fins.

3. Dispositif selon la revendication 1 ou 2, **caractérisé en ce que** le circuit de purification (14 ;62 ;92) présente une admission (30) pour l'huile en circulation fraiche, qui est en liaison de préférence par l'intermédiaire d'un réservoir de compensation (28) avec le circuit de purification (14), et une conduite d'évacuation (34 ;80) pourvue d'une soupape (32,78) pour évacuer l'huile en circulation salie hors du circuit de purification (14 ;62 ;92).

4. Dispositif selon la revendication 1, 2 ou 3, **caractérisé en ce que** dans la conduite d'amenée (12 ;80,104) un dispositif de transport, de préférence une pompe (18) est prévue, qui transporte le lubrifiant dérivé à purifier avec une pression de transport prédéterminée dans le circuit de purification (14 ;62 ;92).

5. Dispositif selon la revendication 1, 2, 3 ou 4, **caractérisé en ce que** l'autre échangeur thermique est un échangeur thermique (22) externe chauffé.

6. Dispositif selon une des revendications précédentes, **caractérisé en ce que** un dispositif de rinçage (42 ;86) pour rincer le filtre d'écoulement traversant (26 ;66) avec un fluide de rinçage est prévu, qui est en liaison d'écoulement de préférence par l'intermédiaire d'une soupape à trois voies (44) et d'une conduite de retour (16) avec le filtre d'écoulement traversant (26 ;66).

7. Dispositif selon la revendication 6, **caractérisé en ce que** le dispositif de rinçage (42 ;86) présente un récipient (46) pour le fluide de rinçage, de préférence le lubrifiant purifié, qui peut être transporté à l'aide d'un milieu auxiliaire, de préférence de l'air pressurisé, en sens contraire à la direction de filtration à travers la membrane de filtre (40 ;68).

8. Dispositif selon une des revendications précédentes, **caractérisé en ce que** sur le filtre d'écoulement traversant (26 ;66) au moins une sonde à ultrasons (48) est prévue.

9. Dispositif selon une des revendications précédentes, **caractérisé en ce que** l'huile en circulation dans le circuit de purification (62 ;92) contient un corps de purification, **en ce que** le dispositif de transport du circuit de purification (62 ;92) est une pompe à jet (64 ;106), dont le raccord d'entraînement (70) est relié avec une conduite d'amenée (72 ;94), qui est en liaison d'écoulement avec le circuit de purification (62 ;92) par l'intermédiaire d'un séparateur (74) disposé en aval du filtre d'écoulement traversant (66), et **en ce que** une pompe (78 ;96) dans la conduite d'amenée (72 ;94) transporte une partie de l'huile en circulation par l'intermédiaire du séparateur (74) hors du circuit de purification (62 ;92) afin d'actionner la pompe à jet (64 ;106).

10. Dispositif selon la revendication 9, **caractérisé en ce que** la conduite d'amenée (80 ;104) débouche dans la pompe à jet (64 ;106).

11. Dispositif selon la revendication 9 ou 10, **caractérisé en ce que** la conduite d'amenée (94) présente, disposée en aval vu dans la direction de transport de la pompe (96), une déviation (98) débouchant dans la conduite d'amenée (104) avant la pompe à jet (106), dans laquelle un hydrocyclone (108) pour purifier l'huile en circulation entrant dans la conduite d'amenée (104).

12. Dispositif selon la revendication 11, **caractérisé en ce que** le réglage des courants partiels entrant dans la conduite d'amenée (94) et la dérivation (98) peut être réglé à l'aide d'une première soupape (100) disposée dans la conduite d'amenée (94) après l'embranchement de la dérivation (98) et d'une deuxième soupape (102) disposée en amont de l'hydrocyclone (108) dans la dérivation (98).

13. Dispositif selon la revendication 11 ou 12, **caractérisé en ce que** un échangeur thermique (112) externe à chauffer est disposé en amont de l'hydrocyclone (108) dans la dérivation (98) vu dans la direction d'écoulement.

14. Système de lubrifiant pour un moteur, un compresseur et/ou un turbocompresseur, comportant un dispositif de purification du lubrifiant, **caractérisé en ce que** le dispositif (10 ;60 ;90) est conçu selon une des revendications 1 à 13.

15. Procédé de purification de lubrifiant, qui est mis en circulation dans un circuit de lubrifiant, au moyen d'un dispositif selon une des revendications 1 à 13, comportant les étapes consistant à :
introduire le lubrifiant à purifier dans le circuit de purification ;
faire circuler l'huile en circulation mélangée avec le lubrifiant ;
réintroduire le lubrifiant filtré sortant du circuit de purification dans le circuit de lubrifiant ; et
évacuer l'huile en circulation salie, notamment sous forme de boue, hors du circuit de purification.

16. Procédé de rinçage du filtre d'écoulement traversant d'un dispositif selon la revendication 6, **caractérisé en ce que** le filtre d'écoulement traversant est rincé à intervalles discontinus.
